# EUROPEAN PATENT SPECIFICATION

(11) **EP 0 962 727 B1**
(45) Date of publication and mention of the grant of the patent: **25.06.2003**
(21) Application number: 99115137.4
(22) Date of filing: 18.12.1995
(51) Int. Cl.: F25B 41/06, F16K 31/64

(54) **Thermostatic expansion valve**
Thermostatisches Expansionsventil
Vanne de détente thermostatique

(30) Priority: 22.12.1994 JP 32074294; 30.06.1995 JP 16600195
(43) Date of publication of application: 08.12.1999
(62) Divisional of application: 95119999.1
(73) Proprietor: Fujikoki Corporation, Tokyo (JP)
(72) Inventor: Watanabe, Kazuhiko, Setagaya-ku, Tokyo (JP); Watanabe, Chiharu, Toyohashi-shi, Aichi-ken (JP)
(74) Representative: Modiano, Guido, Dr.-Ing.

(56) References cited:
- EP-A- 0 537 776
- US-A- 5 303 864

## Description

### BACKGROUND OF THE INVENTION

### Field of the Invention

This invention relates to a thermostatic expansion valve for use in refrigerating systems of car air conditioners.

### Description of the Prior Art

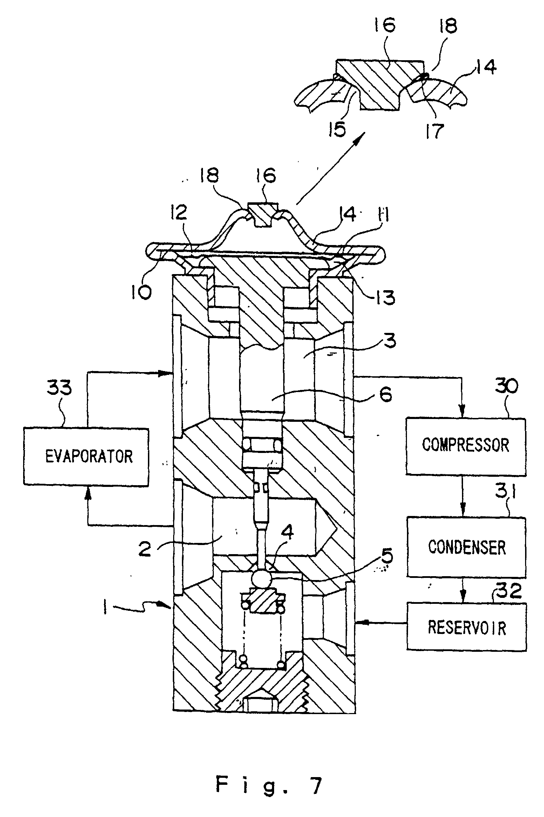

Fig. 7 shows a conventional thermostatic expansion valve to be located in a refrigerating cycle of a car air conditioner or the like. The thermostatic expansion valve comprises: a valve shell 1 including a high-pressure refrigerant passage 2 through which liquid refrigerant to be reduced in pressure travels and a low-pressure refrigerant passage 3 through which vapor-phase refrigerant travels, and having a valve hole 4 formed midway of the high-pressure refrigerant passage 2; a valve member 5 disposed to move to and away from the valve hole 4 to change the opening rate of the valve hole 4; a pressure-operating housing 10 including a diaphragm 11 for driving the valve member 5 through a driving rod 6 to control movements of the valve member 5 and an air-tight chamber 12 partitioned by the diaphragm 11 and filled with heat-sensitive gas, and mounted on the valve shell 1 to detect the temperature of gaseous-phase refrigerant; a plug member 16 for shutting an outer wall opening 15 provided in an outer wall 14 of the pressure-operating housing 10 after heat-sensitive gas is fully introduced into the air-tight chamber 12 through the outer wall opening 15.

Reference numeral 30 refers to a compressor connected to the outlet of the low-pressure refrigerant passage 3; 31 to a condenser connected to the compressor 30; 32 to a reservoir connected to the condenser 31 and to the inlet of the high-pressure refrigerant passage 2; and 33 to an evaporator connected to the outlet of the high-pressure refrigerant passage 2 and to the inlet of the low-pressure refrigerant passage 3.

In the conventional thermostatic expansion valve shown above, the plug member 16 is typically fixed to the housing outer wall 14 through, contact and projection welding between a tapered surface of the plug member 16 and the top surface of the housing outer wall 14 around the opening 15 as shown in Fig. 7. This aspect of fixture, however, inevitably produces a cavity 18 around the projection welding shown at 17, which permits water (condensed moisture, for example) to rest there and causes corrosion of the housing outer wall 14.

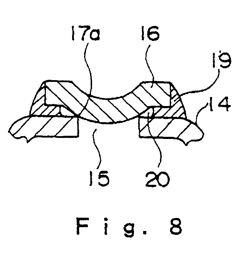

In another method of fixing the plug member 16 to the housing outer wall 14, as shown in Fig. 8, a portion of the spherical surface of the plug member 16 in direct contact with the opening edge of the housing outer wall 14 is secured thereto by projection welding, and the flange portion of the plug member 16 is fixed to the housing outer wall 14 by a solder-welding portion 19 so as to seal the opening 15. In this method, the projection welding is used only for provisional fixture of the plug member 16, and the seal of the opening 15 is established by the soldering 19.
Therefore, the projection welding often fails to make an alloy along the entire circumference of the opening 15 and causes an insufficient strength. Moreover, the solder often fails to extend to the projection welding portion 17a, which makes a hollow 20 between the projection welding portion 17a and the solder-welding portion 19 and causes internal corrosion due to residual flux.

### OBJECT OF THE INVENTION

It is therefore an object of the invention to provide a thermostatic expansion valve in which the seal of an opening in a housing outer wall by a plug member can reliably be established only by projection welding and which is free from corrosion of the housing outer wall around the projection welding.

### SUMMARY OF THE INVENTION

According to the invention, there is provided a thermostatic expansion valve as defined in claim 1.

In order to reliably seal the opening 15 of the housing outer wall by the plug member 16 fixed there by projection welding alone, contacting surfaces of the plug member 16 and the peripheral edge of the opening 15 of the housing outer wall 14 are preferably tapered and projection-welded, the length of the projection welding portion 17 preferably ranges from 0.2 mm to 1.5 mm, and the cavity 18 made around the projection welding portion 17 and otherwise causing corrosion of the housing outer wall 14 is filled with the anti-corrosive material 21 to water-tightly protect the projection welding portion.

In the thermostatic expansion valve according to the invention, which is made by projection welding the contact surfaces of plug member 16 and the peripheral edge of the opening in the housing outer wall 14 and by applying the anti-corrosive material to cover the projection welding portion 17, the seal of the opening 15 in the housing outer wall 14 by the plug member 16 can reliably established only by projection welding, no water resides around the projection welding portion 17 on the housing outer wall 14, and corrosion of the outer wall 14 at the projection welding with the plug member can reliably prevented by the anti-corrosive material 21.

### BRIEF DESCRIPTION OF THE DRAWING

Fig. 1 is a central, longitudinal, cross-sectional view of a thermostatic expansion valve according to a first embodiment of the invention;
Fig. 2 is a fragmentary, enlarged, cross-sectional view showing a cavity defined on a modified thermostatic expansion valve with an elongated projection welding portion;
Fig. 3 is a fragmentary, cross-sectional view of a thermostatic expansion valve according to a second embodiment of the invention;
Fig. 4 is a fragmentary, cross-sectional view of a thermostatic expansion valve according to a third embodiment of the invention;
Fig. 5 is a fragmentary, cross-sectional view of a thermostatic expansion valve according to a fourth embodiment of the invention;
Fig. 6 is a fragmentary, cross-sectional view of a thermostatic expansion valve according to a fifth embodiment of the invention;
Fig. 7 is a fragmentary, cross-sectional view of a conventional thermostatic expansion valve with a different structure for enclosure of heat-sensitive gas; and
Fig. 8 is a central, longitudinal, cross-sectional view of another conventional thermostatic expansion valve.

### DESCRIPTION OF THE PREFERRED EMBODIMENTS

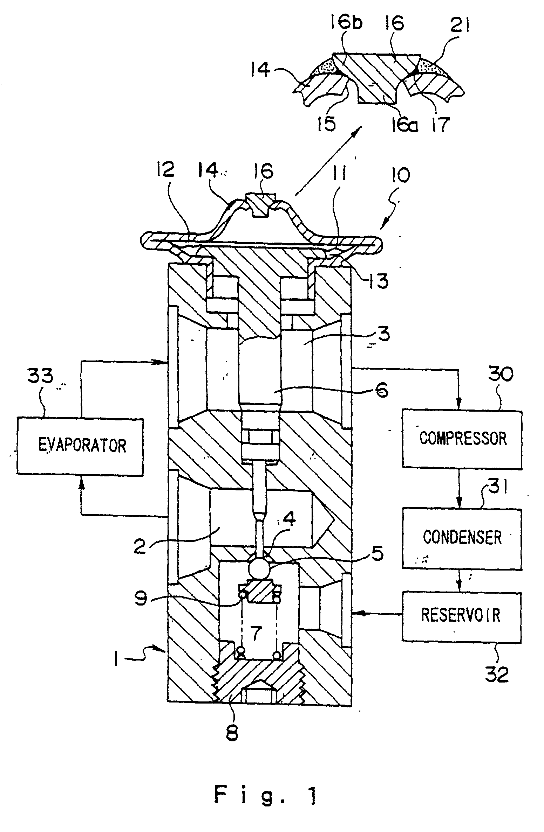

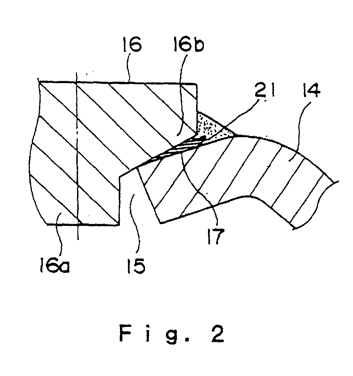

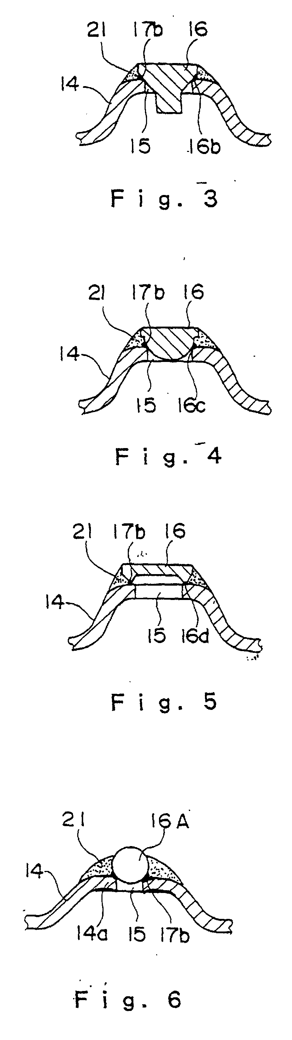

A first embodiment of the invention is explained below in detail with reference to Figs. 1 and 2.

In Figs. 1 and 2, reference numeral 1 denotes a shell of a thermostatic expansion valve to be located in a refrigerating cycle of a car air conditioner. The shell defines a high-pressure refrigerant passage 2 through which liquid refrigerant to be reduced in pressure travels, and a low-pressure refrigerant passage 3 through which gaseous-phase refrigerant travels. The high-pressure refrigerant passage 2 includes a valve hole 4 in the form of a small-diameter throttle hole midway thereof. Therefore, liquid refrigerant introduced into the high-pressure refrigerant passage 2 is adiabatically expanded when running through the valve hole 4 having a small passage area.

The inlet portion of the valve hole 4, from which the refrigerant enter the valve hole 4, defines a valve seat which permits a ball-shaped valve member 5 tightly fits to or move away from it. The valve member 5 is supported by a ball. carrier 7, and biased to the shutting direction (the direction for pressing the valve member 5 to the valve seat of the valve hole 4) by a compression coil spring 9 interposed between the ball carrier 7 and an adjusting nut 8.

Numeral 10 denotes a pressure-operating housing mounted on the upper end of the valve shell 1 to detect the temperature of gaseous-phase refrigerant. The pressure-operating housing 10 includes a diaphragm 11 for driving the valve member 5 through a driving rod 6, an air-tight chamber 12 to be filled with heat-sensitive gas, and an equalizing chamber 13 partitioned from the air-tight chamber 12 by the diaphragm and communicating with the low-pressure refrigerant passage 3.

The housing 10 includes an outer wall 14 having an opening 15 which is sealed by a metallic plug member 16 after a gas-filled state of the air-tight chamber 12 is established by introducing heat-sensitive gas through the opening 15.

Therefore, the air-tight chamber 12 detects the temperature of the gaseous-phase refrigerant which flows through the low-pressure refrigerant passage 3, and varies in pressure with changes in temperature of the gaseous-phase refrigerant. On the other hand, since the equalizing chamber 13 located downstream of the diaphragm 11 and communicating with the low-pressure refrigerant passage 3 exhibits the same pressure as that of the gaseous-phase refrigerant flowing in the low-pressure refrigerant passage 3. Therefore, the diaphragm 11 is moved by the difference between the air-tight chamber 12 and the equalizing chamber 13, and transfer the movement to the valve member 5 through the driving rod 6'to control the opening rate of the valve hole 4.

As shown in the enlarged fragmental portion of Fig. 1 and in Fig. 2, the plug member 16 includes a projection 16a to be inserted in the opening 15 of the housing outer wall 14, and a conical portion 16b having a funnel-shaped lateral surface which extends with an angle of about 90 degrees to 120 degrees and contacts with the edge of the opening 15 in the housing outer wall 14 (which is also funnel-shaped so as to slope down with a tapering angle of about 120 degrees toward the center of the opening 15). These tapered contact portions of the conical portion 16b and the peripheral edge of the opening 15 of the housing outer wall 14 are joined by projection welding over the length of 0.2 mm to 1.5 mm. As a result, the opening 15 of the housing outer wall 14 is sealed by the projection welding alone and maintains the gas-filled status of the air-tight chamber 12.

In this status, a cavity exists around the projection welding portion 17 on the housing outer wall 14 as shown in Figs. 1 and 2, and unless removed, it will cause corrosion of the housing outer wall 14. In the present invention, therefore, an anticorrosive material 21, such as adhesive or the like, is applied to the cavity to remove space around the welding portion of the plug member 16 such that water cannot enter or remain there. In other aspects, the thermostatic expansion valve according to the embodiment is the same as the conventional expansion valve shown in Fig. 7. The same or equivalent elements are therefore designated with the same reference numerals as used in Fig. 7, and their detailed explanation is omitted.

Enclosure of heat-sensitive gas within the air-tight chamber 12 in the housing 10 is performed by the method explained below. That is, the pressure-operating housing 10 including the driving rod 6 and the diaphragm 11 is sandwiched and fixed between a metallic lower block and a non-metallic upper block such that the opening 15 opens upward. Then the interior space of the upper block is evacuated to establish a nearly vacuum state in the air-tight chamber 12, and heat-sensitive gas is introduced to fill the air-tight chamber 12.

After that, a movable plunger in the upper block is pressed down to introduce the plug member 16 held by the plunger into the opening 15 until the conical portion 16b of the plug member 16 contacts with the peripheral edge of the opening in the housing outer wall 14. In this state, a voltage for projection welding is applied to the plunger and the lower block. As a result, the plug member 16 is fixed to the housing outer wall 14 by projection welding at their direct contact while keeping the gas-filled status of the air-tight chamber 12.

Fig. 3 shows a second embodiment of the invention. In this embodiment, the housing outer wall 14 includes a planar surface around the opening 15, and the taper angle of the conical portion 16b of the plug member 16 ranges from 90 degrees to 130 degrees. The conical portion 16b of the plug member 16 is fixed to the edge of the opening 15 by projection welding at the edge contact portion 17b, and an anti-corrosive material 21 is applied to fill the cavity 18 made around the projection welding 17b. Thus the portion around the welding portion is configured to prevent water from residing there.

Fig. 4 shows a third embodiment of the invention. In this embodiment, the housing outer wall 14 includes a planar surface around the opening 15. The spherical surface 16c of the plug member 16 is fixed to the edge of the opening 15 by projection welding at the edge contact portion 17b, and an anti-corrosive material 21 is applied to fill the cavity 18 made around the projection welding 17b. Thus the portion around the welding portion is configured to prevent water from residing there.

Fig. 5 shows a fourth embodiment of the invention. In this embodiment, the housing outer wall 14 includes a planar surface around the opening 15. An edge portion 16d of the plug member 16 is fixed to the planar portion around the opening 15 of the housing outer wall 14 at an edge contact portion 17b by projection welding. Then an anti-corrosive material 21 is applied to the cavity 18 made around the welding portion. Thus the portion around the welding portion is configured to prevent water from residing there.

Fig. 6 shows a fifth embodiment of the invention. In this embodiment, a ball-shaped plug member 16A, made of steel or stainless steel, is used and fixed to the housing wall 14 at the edge contact portion 17b by projection welding. The housing outer wall 14 around the opening 15 may be arcuated as shown at 14a to fittingly receive the ball 16A. An anti-corrosive material 21 is applied to water-tightly protect the welding portion 17b.

As described above, all thermostatic expansion valves according to the invention are made by fixing the plug member to the peripheral edge of the opening of the housing outer wall at the direct contact portion therewith by projection welding and then applying an anti-corrosive material to fill a cavity made around the welding portion. Therefore, the seal of the opening in the housing outer wall by the plug member can be reliably established only by projection welding. At the same time, it is prevented that water resides around the projection welding portion on the housing outer wall, and corrosion of the outer wall around the welding portion of the plug member can be reliably prevented.

## Claims

1. A thermostatic expansion valve comprising:
a valve member (5) for controlling the flow rate of a refrigerant flowing through an evaporator (33) in a refrigerating cycle by changing the opening of a valve hole (4);
a housing (10) having an air-tight chamber (12) filled with heat-sensitive gas, the pressure of which is varied in correspondence to the change of temperature of said refrigerant so as to drive said valve member (5); and
a plug member (16) sealing an opening (15) formed on an outer wall of said housing (10) so as to seal said heat-sensitive gas inside said air-tight chamber (12);
wherein
the peripheral edge of said opening (15) and said plug member (16) are welded solely by projection welding (17) at tapered contacting surfaces thereof, *while corrosion of the outer wall (14) at the projection welding (17) with the plug member (16) is reliably prevented by the provision of an anticorrosive material (21) in the cavity (18) formed between the outer wall (14), the plug member (16) and the projection welding (17)*.

2. The thermostatic expansion valve according to claim 1, wherein the tapered angle of said tapered contacting surface of the plug member is approximately 90 to 120 degrees, and the length of the projection welding portion is approximately 0.2 mm to 1.5 mm.

3. The thermostatic expansion valve according to claim 1 or claim 2, wherein said plug member (16) is formed of metal.

4. The thermostatic expansion valve according to claim 1 or claim 2, wherein said plug member (16) is a metallic ball.

5. The thermostatic expansion valve according to claim 1 or claim 2, wherein said plug member (16) has a spherical surface, which is welded to said opening (15).

## Patentansprüche

1. Ein thermostatisches Expansionsventil, das folgendes umfasst:
ein Ventilglied (5) zum Steuern der Fließgeschwindigkeit eines in einem Kühlzyklus durch einen Verdampfer (33) fließenden Kühlmittels, indem die Öffnung eines Ventillochs (4) geändert wird;
ein Gehäuse (10), das eine luftdichte Kammer (12) hat, die mit einem wärmeempfindlichen Gas gefüllt ist, dessen Druck mit der Änderung der Temperatur des Kühlmittels verändert wird, um das Ventilglied (5) zu betreiben; und
ein Pfropfenglied (16), das eine an einer Außenwand des Gehäuses (10) gebildete Öffnung (15) abdichtet, um das wärmeempfindliche Gas innerhalb der luftdichten Kammer (12) abzudichten; worin
der Umfangsrand der Öffnung (15) und das Pfropfenglied (16) lediglich mittels Buckelschweißung (17) an ihren verjüngten, in Kontakt befindlichen Oberflächen verschweißt werden, während die Korrosion der Außenwand (14) an der Buckelschweißung (17) mit dem Pfropfenglied (16) zuverlässig durch die Bereitstellung eines anti-korrosiven Materials (21) in dem Hohlraum (18) verhindert wird, der zwischen der Außenwand (14), dem Pfropfenglied (16) und der Buckelschweißung (17) gebildet wird.

2. Das thermostatische Expansionsventil nach Anspruch 1, worin der verjüngte Winkel der verjüngten, in Kontakt befindlichen Oberfläche des Pfropfenglieds etwa 90 bis 120 Grad beträgt und die Länge des Buckelschweiß-Abschnitts etwa 0,2 mm bis 1,5 mm beträgt.

3. Das thermostatische Expansionsventil nach den Ansprüchen 1 oder 2, worin das Pfropfenglied (16) aus Metall gebildet ist.

4. Das thermostatische Expansionsventil nach den Ansprüchen 1 oder 2, worin das Pfropfenglied (16) eine metallische Kugel ist.

5. Das thermostatische Expansionsventil nach den Ansprüchen 1 oder 2, worin das Pfropfenglied (16) eine kugelförmige Oberfläche hat, die an die Öffnung (15) geschweißt wird.

## Revendications

1. Vanne de détente thermostatique comportant :
un organe de soupape (5) destiné à commander le débit d'un réfrigérant s'écoulant à travers un évaporateur (33) d'un cycle réfrigérant en faisant varier l'ouverture d'un trou de soupape (4),
un boîtier (10) ayant une chambre étanche à l'air (12) remplie de gaz sensible à la chaleur, dont la pression varie en fonction du changement de température dudit réfrigérant de manière à entraîner ledit organe de soupape (5), et
un organe de bouchon (16) fermant de manière étanche une ouverture (15) formée sur une paroi extérieure dudit boîtier (10) de manière à assurer l'étanchéité dudit gaz sensible à la chaleur à l'intérieur de ladite chambre étanche à l'air (12),
dans laquelle
le bord périphérique de ladite ouverture (15) et ledit organe de bouchon (16) sont soudés uniquement par une soudure par projection (17) au niveau de surfaces de contact coniques de ceux-ci, tandis qu'une corrosion de la paroi extérieure (14) au niveau de la soudure par projection (17) avec l'organe de bouchon (16) est empêchée de manière fiable par la fourniture d'un matériau anticorrosion (21) dans la cavité (18) formée antre la paroi extérieure (14), l'organe de bouchon (16), et la soudure par projection (17).

2. Vanne de détente thermostatique selon la revendication 1, dans laquelle l'angle d'inclinaison de ladite surface de contact conique de l'organe de bouchon est approximativement de 90 à 120 degrés, et la longueur de la partie de soudure par projection est approximativement de 0,2 mm à 1,5 mm.

3. Vanne de détente thermostatique selon la revendication 1 ou 2, dans laquelle ledit organe de bouchon (16) est en métal.

4. Vanne de détente thermostatique selon la revendication 1 ou 2, dans laquelle ledit organe de bouchon (16) est une bille métallique.

5. Vanne de détente thermostatique selon la revendication 1 ou 2, dans laquelle ledit bouchon de bouchon (16) a une surface sphérique, qui est soudée sur ladite ouverture (15).
